# EUROPEAN PATENT SPECIFICATION

(11) **EP 2 765 481 B1**
(45) Date of publication and mention of the grant of the patent: **11.03.2020**
(21) Application number: 12840259.1
(22) Date of filing: 27.08.2012
(51) Int. Cl.: G06F 1/32, G06F 9/48, G06F 1/20, H04W 52/02, G06F 1/3206, G06F 1/3212, G06F 1/324, G06F 9/50

(54) **MOBILE TERMINAL AND METHOD FOR ADJUSTING OPERATION LOAD OF MOBILE TERMINAL**
MOBILES ENDGERÄT UND VERFAHREN ZUR EINSTELLUNG DER BETRIEBSLAST EINES MOBILEN ENDGERÄTS
TERMINAL MOBILE ET PROCÉDÉ DE RÉGLAGE DE LA CHARGE DE FONCTIONNEMENT DU TERMINAL MOBILE

(30) Priority: 09.10.2011 CN 201110303626
(43) Date of publication of application: 13.08.2014
(73) Proprietor: Huizhou TCL Mobile Communication Co., Ltd., Huizhou, Guangdong 516006 (CN)
(72) Inventor: GUO, Hanlin, HuiZhou Guangdong 516006 (CN)
(74) Representative: Petraz, Gilberto Luigi
(86) International application number: PCT/CN2012/080638
(87) International publication number: WO 2013/053270

(56) References cited:
- CN-A- 101 365 192
- CN-A- 102 104 690
- CN-A- 102 156 530
- GB-A- 2 446 168
- US-A1- 2003 226 049
- US-A1- 2009 177 903

## Description

### FIELD OF THE DISCLOSURE

The present invention relates to a field of mobile terminal technology, and more particularly relates to a mobile terminal and a method for adjusting operation load thereof.

### BACKGROUND OF THE DISCLOSURE

With advancements of hardware specifications of smart phones, the processor clock speed and operation ability of the smart phones are continuously increasing. In addition, in order to satisfy the requirements of structural design, appearance, and size for the general users, the design of the cellular phones is focused on being light-weight and thin, but the thermal dispersion thereof is difficult to consider at the same time. The heat generation of the cellular phone processor is directly realized on the shell of the cellular phone. Therefore, the heat is generated on the shell of the cellular phone causing the shell to be overheating, and the life time of the battery is shortened.

The present solution provides a way to prevent overheating on the cellular phone which is to adjust the clock speed of the central processor unit (CPU), but directly forcing the processor clock speed to reduce would cause the system to be unstable. If many application programs are currently operated in the cellular phone, the system would collapse or crash.

Moreover, because all of the programs are application software, which are installed in the mobile terminal in a way of Application Package File (APK), the system cannot close these application programs wisely. US 20030226049A1, GB2446168A are related prior arts for this field.

### SUMMARY OF THE DISCLOSURE

One main technical problem solved in the present invention is to provide a mobile terminal and a method for adjusting operation loading thereof. The method can adjust the processor clock speed frequency of the mobile terminal to keep the mobile terminal in the proper working parameters so as to guarantee the stability of the system.

In order to solve the technical problem described above, one technical propose provided in the present invention is: a method for adjusting operation load of a mobile terminal and the method comprises:
A step of detecting a processor clock speed frequency, a battery remaining capacity or a processor temperature;
A step of acquiring the processor clock speed frequency, the battery remaining capacity or the processor temperature and the processor temperature is obtained by a temperature sensor;
A step of determining whether the processor clock speed frequency is higher than a first predetermined threshold value, whether the battery remaining capacity is lower than a second predetermined threshold value, or whether the processor temperature is higher than a third predetermined threshold value;
A step of generating a strategy for adjusting the processor clock speed frequency if any one or all of the conditions above are yes and the strategy is to calculate to acquire the application programs, which are required to be closed;
A step of closing the application program is executed through a driver layer of the mobile terminal in accordance with the strategy to release resource and reduce the processor clock speed frequency.

Amongst, before the step of detecting processor clock speed frequency, battery remaining capacity or a processor temperature, comprising:
A step of acquiring or setting the first predetermined threshold value, the second predetermined threshold value or the third predetermined threshold value.

Amongst, the step of closing the application program is executed through a driver layer of the mobile terminal in accordance with the strategy to release resource and reduce the processor clock speed frequency, comprising:
A step of determining whether the application program is an essential application program, if no, then the application program is closed directly, if yes, then the mobile terminal provides an application program list for a user to decide whether to close the application program if the application program is an essential application program.

Amongst, the step of acquiring the processor clock speed frequency, the battery remaining capacity or the processor temperature, comprising:
The processor clock speed frequency is acquired by a message transfer mechanism of an operating system.

Amongst, the step of acquiring the processor clock speed frequency, the battery remaining capacity or the processor temperature, comprising:
The processor clock speed frequency is acquired by a system application programing interface.

Amongst, the step of acquiring the processor clock speed frequency, the battery remaining capacity or the processor temperature, comprising:
The battery remaining capacity is acquired by a system application programing interface.

In order to solve the technical problem above, another technical solution provide in the present invention is: a method for adjusting operation load of a mobile terminal is provided and the method comprises: detecting a processor clock speed frequency, a battery remaining capacity or a processor temperature; acquiring the processor clock speed frequency, the battery remaining capacity or the processor temperature; determining whether the processor clock speed frequency is higher than a first predetermined threshold value, whether the battery remaining capacity is lower than a second predetermined threshold value, or whether the processor temperature is higher than a third predetermined threshold value; generating a strategy for adjusting the processor clock speed frequency if any one or all of the conditions above are yes and the strategy is to calculate which of the application programs of the mobile terminal required to be closed; closing the application program in accordance with a driver layer of the mobile terminal by the strategy to release resource and reduce the processor clock speed frequency.

Amongst, before the step of detecting processor clock speed frequency, battery remaining capacity or a processor temperature, comprising:
A step of acquiring or setting the first predetermined threshold value, the second predetermined threshold value or the third predetermined threshold value.

Amongst, the step of closing the application program is executed through a driver layer of the mobile terminal in accordance with the strategy to release resource and reduce the processor clock speed frequency, comprising: determining whether the application program is an essential application program, if no, then the application program is closed directly, if yes, then the mobile terminal provides an application program list for a user to decide whether to close the application program if the application program is an essential application program.

Amongst, the step of closing the application program is executed through a driver layer of the mobile terminal in accordance with the strategy to release resource and reduce the processor clock speed frequency, comprising: closing the application program through a driver layer of the mobile terminal.

Amongst, the step of acquiring the processor clock speed frequency, the battery remaining capacity or the processor temperature, the acquiring method is to acquire the processor clock speed frequency, the battery remaining capacity or the processor temperature by a message transfer mechanism of an operating system and a driver program.

In order to solve the technical problem above, another technical solution provide in the present invention is: a mobile terminal is provided and the mobile terminal comprises: a processor clock speed detecting module configured for detecting a processor working frequency, which is clock speed frequency; a power detecting module configured for detecting a battery remaining capacity; a processor temperature detecting module configured for detecting a processor temperature; an acquiring module configured for acquiring the processor clock speed frequency, the battery remaining capacity or the processor temperature; a first determining module configured for determining whether the processor clock speed frequency is higher than a first predetermined threshold value, whether the battery remaining capacity is lower than a second predetermined threshold value, or whether the processor temperature is higher than a third predetermined threshold value; a calculating module configured for generating a strategy for adjusting the processor clock speed frequency and the strategy is to calculate which of the application programs of the mobile terminal required to be closed; a processor frequency adjusting module configured for releasing resource and reducing the processor clock speed frequency in accordance with the strategy for closing the application programs.

Amongst, the mobile terminal comprises: a threshold module configured for acquiring or setting the first predetermined threshold value, the second predetermined threshold value or the third predetermined threshold value.

Amongst, the processor frequency adjusting module comprises: a second determining module configured for determining whether the application program is an essential application program before closing the application program, if no, then the application program is closed directly, if yes, then the mobile terminal provides an application program list for a user to decide whether to close the application program if the application program is an essential application program.

Amongst, the processor frequency adjusting module closes the application program through a driver layer of the mobile terminal.

Amongst, the acquiring module acquires the processor clock speed frequency, the battery remaining capacity or the processor temperature by a message transfer mechanism of an operating system and a driver program.

The advantage of the present invention is: by comparing with the conventional solution to directly adjust the processor clock speed frequency, the present invention is to detect the processor clock speed frequency, the battery remaining capacity and the processor temperature and compare the processor clock speed frequency, the battery remaining capacity and the processor temperature with the predetermined threshold value. If the clock speed frequency is too high, the power is not enough or the temperature is too high, it is not direct to reduce the frequency of the processor but it is to calculate which of application programs of the mobile terminal are required to be closed to reduce the frequency to be the normal value. By the method describe above, the present invention can adjust the processor clock speed frequency of the mobile terminal to keep the mobile phone in the proper working parameters so as to guarantee the stability of the system.

The invention is defined by the independent claims. Further aspects of the invention are outlined in the dependent claims. Embodiments which do not fall within the scope of the claims are to be understood as examples useful for the understanding of the invention.

### DESCRIPTION OF THE DRAWINGS

FIG. 1 is a flow chart illustrating a method for adjusting operation load of a mobile terminal in one embodiment of the present invention;
FIG. 2 is a flow chart illustrating a method for adjusting operation load of a mobile terminal in another embodiment of the present invention;
FIG. 3 is a structural view illustrating a mobile terminal in one embodiment of the present invention; and
FIG. 4 is a flow chart illustrating a strategy for acquiring adjusting operation load of a mobile terminal in one embodiment of the present invention.

### DETAILED DESCRIPTION OF THE PREFERRED EMBODIMENTS

The above-mentioned description of the present invention can be best understood by referring to the following detailed description of the preferred embodiments and the accompanying drawings.

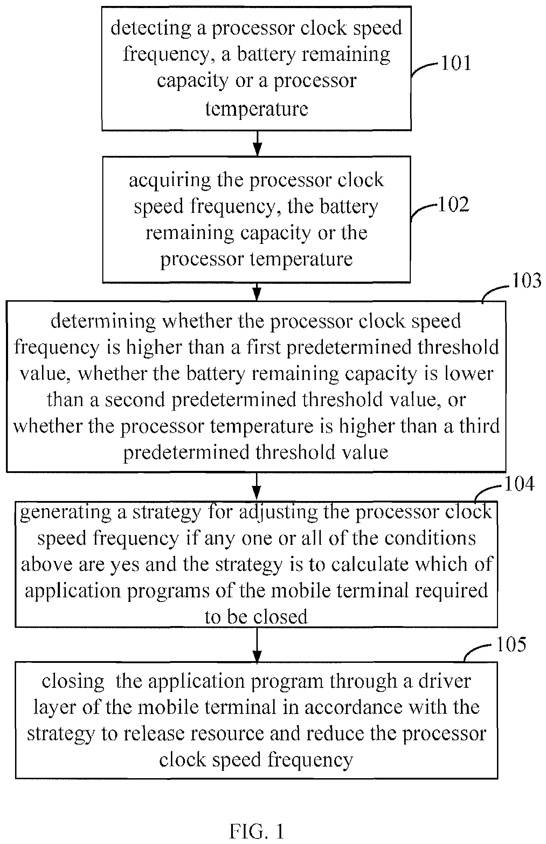

FIG. 1 is a flow chart illustrating a method for adjusting operation load of a mobile terminal in one embodiment of the present invention and the method includes the following steps:

In step 101, it is to detect a processor clock speed frequency, a battery remaining capacity or a processor temperature;

The detecting parameters includes: the processor clock speed frequency, the battery remaining capacity or the processor temperature;

In step 102, it is to acquire the processor clock speed frequency, the battery remaining capacity or the processor temperature;

The method for acquiring each parameters is as the following: by a message transfer mechanism of an operating system or system application programing interface (API), the processor clock speed frequency can acquire a working status of the processor, such as the current working frequency of the processor; the battery remaining capacity is to acquire a power information by the system API; the processor temperature is to acquire a real time temperature of the processor chip by adding a temperature sensor.

In step 103, it is to determine whether the processor clock speed frequency is higher than a first predetermined threshold value, whether the battery remaining capacity is lower than a second predetermined threshold value, or whether the processor temperature is higher than a third predetermined threshold value;

The first predetermined threshold value is the highest warning value of the processor clock speed frequency, the second predetermined threshold value is a warning value of the battery remaining capacity, and the third predetermined threshold value is the warning value of the processor temperature. The status values in each of the current parameters are acquired to compare with the corresponding threshold values.

In step 104, it is to generate a strategy for adjusting the processor clock speed frequency if any one or all of the conditions above are yes and the strategy is to calculate which of application programs of the mobile terminal required to be closed;

When the processor clock speed frequency is higher than the first predetermined threshold value, the battery remaining capacity is lower than the second predetermined threshold value, or the processor temperature is higher than the third predetermined threshold value and it is meaning that the processor clock speed frequency is too high, the power is not enough or the processor temperature is too high, the strategy for adjusting the processor clock speed frequency is calculated and the strategy is to calculate which of the application programs of the mobile terminal required to be closed.

In step 105, it is to close the application program through a driver layer of the mobile terminal in accordance with the strategy to release resource and reduce the processor clock speed frequency.

After receiving the strategy for adjusting the processor clock speed frequency, it is to determine whether the application program is an essential application program, if no, then the application is closed directly, if yes, then the mobile terminal provides an application program list for a user to decide whether to close the application program if the application program is an essential application program. For example, the mobile terminal automatically closes some application programs, which will not affect the stability of the system, to release resource through a driver layer of the mobile terminal. If some application programs are significant or currently in use, such as network connection for background, a list is automatically generated for a user to decide whether to close the application program if the application program is an essential application program at the same time. When the application programs are completely closed, it is to force the processor to adjust the frequency to lower than the warning value by adjusting the system API or the message transfer mechanism. After the adjustment is done, the detection of the status in each of parameters is continued. If the frequency adjusting condition is satisfied, the adjustment is continued.

Amongst, the present invention is a software solution and can be achieved by software source code.

The present invention firstly detects the processor clock speed frequency, the battery remaining capacity or the processor temperature, and the detected clock speed frequency, power or temperature value is compared with the predetermined warning value. If the clock speed frequency is too high, the power is not enough or the temperature value is too high, it is not to reduce the frequency of the processor directly, but it is to calculate which of the application programs of the mobile terminal required to be closed. The frequency of the processor is reduced by closing the application programs to release resource. By the method described above, the present invention can adjust the processor clock speed frequency of the mobile terminal and the mobile terminal is maintained under a proper working parameter and stability of the system is guaranteed at the same time.

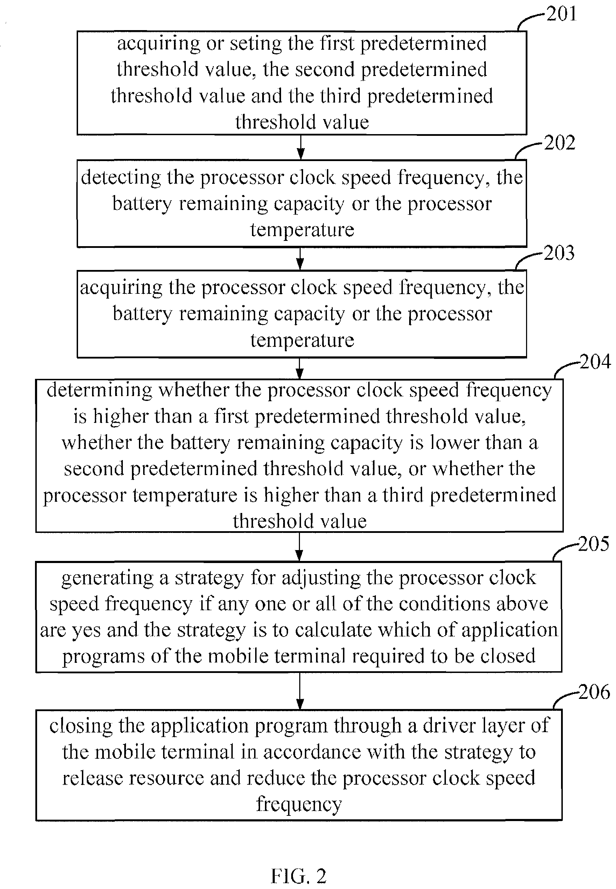

FIG. 2 is a flow chart a method for adjusting operation load of a mobile terminal in another embodiment of the present invention and the method includes step 201, step 202, step 203, step 204, step 205 and step 206. Amongst, steps 202 - 206 are the same as the steps 101 - 105 except step 201, and the description of the steps 202 - 206 are omitted herein.

In step 201, it is to acquire or set the first predetermined threshold value, the second predetermined threshold value and the third predetermined threshold value;

At first, a main function of the mobile terminal provides an icon of a shortcut and the user enters therein to choose whether to activate the automatic adjustment of the processor clock speed and also set the monitoring rule at the same time. The parameters in the monitoring rule includes the processor clock speed frequency, the battery remaining capacity or the processor temperature, such as setting the highest warning value of the processor clock speed frequency, the warning value of the processor temperature, the warning value of the battery power, the normal value of the processor clock speed frequency and so on. The first predetermined threshold value is the highest warning value of the processor clock speed frequency, the second predetermined threshold value is the warning value of the battery remaining capacity and the third predetermined threshold value is the warning value of the processor temperature.

The first predetermined threshold value, the second predetermined threshold value and the third predetermined threshold value can also be the threshold values defined by the mobile terminal when the mobile terminal is released in the market.

In step 202, it is to detect the processor clock speed frequency, the battery remaining capacity or the processor temperature;

In step 203, it is to acquire the processor clock speed frequency, the battery remaining capacity or the processor temperature;

In step 204, it is to determine whether the processor clock speed frequency is higher than the first predetermined threshold value, whether the battery remaining capacity is lower than the second predetermined threshold value, or whether the processor temperature is higher than the third predetermined threshold value;

In step 205, it is to generate a strategy for adjusting the processor clock speed frequency if any one or all of the conditions above are yes and the strategy is to calculate which of the application programs of the mobile terminal required to be closed;

In step 206, it is to close the application program through a driver layer of the mobile terminal in accordance with the strategy to release resource and reduce the processor clock speed frequency.

The present invention firstly detects the processor clock speed frequency, the battery remaining capacity or the processor temperature, and the detected clock speed frequency, power or temperature value is compared with the predetermined warning value. If the clock speed frequency is too high, the power is not enough or the temperature value is too high, it is not to reduce the frequency of the processor directly, but it is to calculate which of the application programs of the mobile terminal required to be closed. The frequency of the processor is reduced by closing the application programs to release resource. By the method described above, the present invention can adjust the processor clock speed frequency of the mobile terminal and the mobile terminal is maintained under a proper working parameter and the stability of the system is guaranteed at the same time.

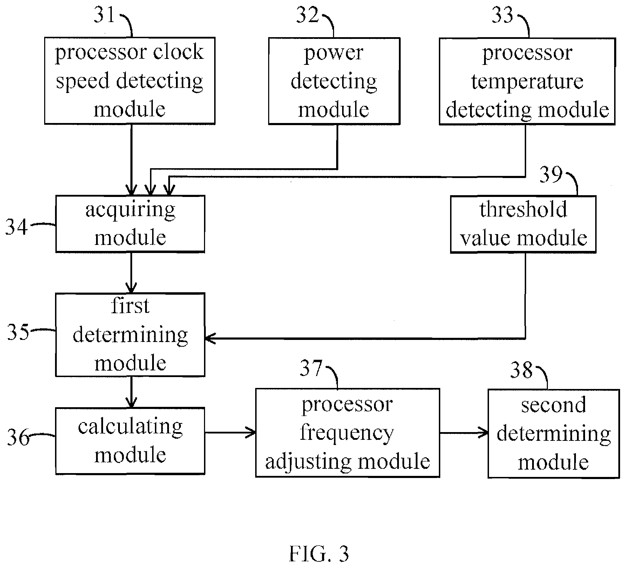

FIG. 3 is a structural view illustrating a mobile terminal in one embodiment of the present invention. As shown in FIG. 3, the mobile terminal includes a processor clock speed detecting module 31, a power detecting module 32, a processor temperature detecting module 33, an acquiring module 34, a first determining module 35, a calculating module 36, a processor frequency adjusting module 37, a second determining module 38 and a threshold value module 39.

Amongst, the processor clock speed detecting module 31 is configured for detecting a processor working frequency, which is a clock speed frequency; the power detecting module 32 is configured for detecting a battery remaining capacity; the processor temperature detecting module 33 is configured for detecting a processor temperature; the acquiring module 34 is configured for acquiring the processor clock speed frequency, the battery remaining capacity or the processor temperature; the first determining module 35 is configured for determining whether the processor clock speed frequency is higher than a first predetermined threshold value, whether the battery remaining capacity is lower than a second predetermined threshold value, or whether the processor temperature is higher than a third predetermined threshold value; the calculating module 36 is configured for generating a strategy for adjusting the processor clock speed frequency and the strategy is to calculate which of the application programs of the mobile terminal required to be closed; the processor frequency adjusting module 37 is configured for releasing resource and reducing the processor clock speed frequency in accordance with the strategy for closing the application programs; the second determining module 38 is configured for determining whether the application program is an essential application program before closing the application program, if no, then the application program is closed directly, if yes, then the mobile terminal provides an application program list for a user to choose decide whether to close the application program if the application program is an essential application program; the threshold module 39 is configured for acquiring or setting the first predetermined threshold value, the second predetermined threshold value or the third predetermined threshold value.

At first, a main function of the mobile terminal provides an icon of a shortcut and the user enters therein to choose whether to activate the automatic adjustment of the processor clock speed and also set the monitoring rule at the same time. The parameters in the monitoring rule includes the processor clock speed frequency, the battery remaining capacity or the processor temperature, such as setting the highest warning value of the processor clock speed frequency, the warning value of the processor temperature, the warning value of the battery power, the normal value of the processor clock speed frequency and so on. The threshold value 39 acquires or sets the first predetermined threshold value (the highest warning value of the processor clock speed frequency), the second predetermined threshold value (the warning value of the battery remaining capacity) and the third predetermined threshold value (the warning value of the processor temperature). After the frequency adjustment is automatically activated, the processor clock speed frequency detecting module 31 detects the processor working frequency, which is the clock speed frequency; the power detecting module 32 is to detect the battery remaining capacity; the processor temperature detecting module 33 is to detect the processor temperature. The method for acquiring each parameters is as the following: by a message transfer mechanism of an operating system or system application programing interface (API), the processor clock speed frequency can acquire a working status of the processor, such as the current working frequency of the processor; the battery remaining capacity is to acquire a power information by the system API; the processor temperature is to acquire a real time temperature of the processor chip by adding a temperature sensor. The acquiring module 34 is to acquire the status values in each of parameters. The first determining module 35 is to compare the status values with the warning values in each of the parameters in the corresponding monitoring rule. If the comparing result is: the processor clock speed frequency is too high, the power is not enough, or the processor temperature is too high, the frequency reducing operation of the mobile terminal is automatically activated. Firstly; the calculating module 36 will calculate which of application programs of the mobile terminal are required to be closed to reduce the frequency to be the normal value, and the adjusting rule is automatically calculated and the information instruction is transmitted to the processor frequency adjusting module 37. After the processor frequency adjusting module 37 receives the information instruction, the second determining module 38 determines whether the application programs, which are required to be closed, are the essential application programs, if no, then the system is directly closed, if yes, then the system provides an application program list for the user to choose the application programs to close. For example, the mobile terminal automatically closes some application programs, which will not affect the stability of the system, to release resource through a driver layer of the mobile terminal. If some application programs are significant or currently in use, such as network connection for background, a list is automatically generated for a user to choose. These chosen application programs are closed at the same time. When the application programs are completely closed, it is to force the processor to adjust the frequency lower than the warning value by adjusting the system API or the message transfer mechanism. After the adjustment is done, the detection of the status of each of parameters is continued. If the frequency adjusting condition is satisfied, the adjustment is continued.

The present invention is to detect each of the parameters in the mobile terminal. When the adjustment condition is satisfied, the command and information is transmitted by the message transfer mechanism of the operating system and the driver program to quickly adjust the processor clock speed manually or automatically. The inessential application programs are closed to save the system resource, extend the standby time, reduce the heat generation of the mobile terminal and enhance the user experience.

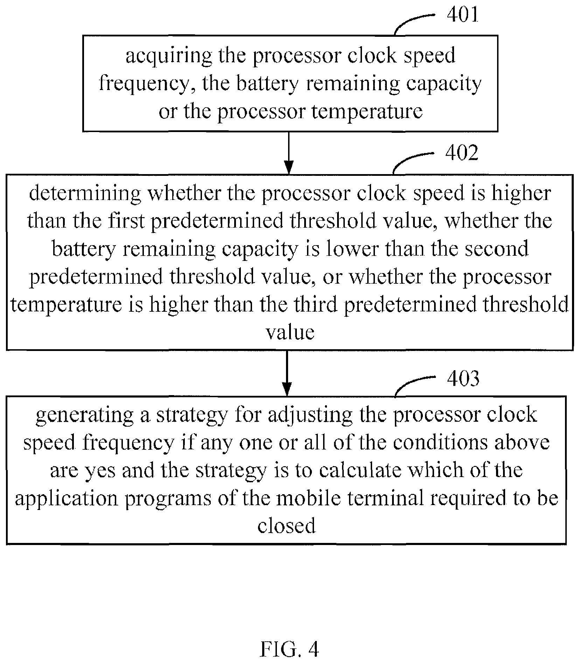

FIG. 4 is a flow chart illustrating a strategy for acquiring operation load adjustment in one embodiment of the present invention and the steps of the strategy is as the following:

In step 401, it is to acquire the processor clock speed frequency, the battery remaining capacity or the processor temperature;

The acquired parameters include: the processor clock speed frequency, the battery remaining capacity or the processor temperature. The acquiring method of the parameters is as the following: by a message transfer mechanism of the operating system or system application programing interface (API), the processor clock speed frequency can acquire a working status of the processor, such as the current working frequency of the processor; the processor temperature is to acquire a real time temperature of the processor chip by adding a temperature sensor.

In step 402, it is to determine whether the processor clock speed is higher than the first predetermined threshold value, whether the battery remaining capacity is lower than the second predetermined threshold value, or whether the processor temperature is higher than the third predetermined threshold value;

Before steps 401 and 402, a main function of the mobile terminal firstly provides an icon of a shortcut and the user enters therein to choose whether to activate the automatic adjustment of the processor clock speed and set the monitoring rule. The parameters in the monitoring rule includes the processor clock speed frequency, the battery remaining capacity or the processor temperature, such as setting the highest warning value of the processor clock speed frequency, the warning value of the processor temperature, the warning value of the battery power, the normal value of the processor clock speed frequency and so on. The first predetermined threshold value is the highest warning value of the processor clock speed frequency, the second predetermined threshold value is the warning value of the battery remaining capacity and the third predetermined threshold value is the warning value of the processor temperature.

The first predetermined threshold value, the second predetermined threshold value and the third predetermined threshold value can also be the threshold values defined by the mobile terminal when the mobile terminal is released in the market.

Step 402 is a comparing and determining step and is to compare the current status values of the parameters with the corresponding threshold values.

In step 403, it is to generate a strategy for adjusting the processor clock speed frequency if any one or all of the conditions above are yes and the strategy is to calculate which of the application programs of the mobile terminal required to be closed.

If any one of the parameters is over the warning value defined by the user, the information thereof is transmitted to the application manager. The application manager will calculate each of resource holding condition, such as the parameter of the processor resource holding percentage, the power consumption and so on, for all of the currently working application programs. The frequency adjusting strategy is comprehensively calculated to satisfy the monitoring rule and the strategy is to calculate which of the application programs of the mobile terminal required to be closed. The application programs are closed to release CPU resource so as to adjust the processor clock speed to the normal level. If the status values for any one of the parameters are lower than the warning values, the judgments in step 402 are no, then it is not to execute any operations.

The present embodiment is to acquire the processor clock speed frequency, the battery remaining capacity or the processor temperature and compare the processor clock speed frequency, the battery remaining capacity or the processor temperature with the predetermined threshold value. If the clock speed frequency is too high, the power is not enough or the temperature is too high, it is not to reduce the clock speed frequency directly but it is to calculate which application programs of the mobile terminal are required to be closed. The processor frequency is reduced by closing the application program to release the resource. By the method described above, the present invention can adjust the processor clock speed frequency of the mobile terminal and the mobile terminal can be maintained in the proper working parameters so as to guarantee the stability of the system.

As described above, the present invention has been described with preferred embodiments thereof and it is understood that many changes and modifications to the described embodiments can be carried out without departing from the scope of the invention that is intended to be limited only by the appended claims.

## Claims

1. A method for adjusting operation load of a mobile terminal, comprising:
detecting parameters of a processor clock speed frequency, a battery remaining capacity, or a processor temperature;
acquiring at least one parameter from the mobile terminal (102);
comparing each parameter with a predetermined threshold value to obtain a comparison result (103); **wherein** the method further comprises:
determining that an application program of the mobile terminal is required to be closed in accordance with the comparison result; and
closing the application program to release resource and reduce the processor clock speed frequency (105);
**characterized in that** the step of closing the application program to release resource and reduce the processor clock speed frequency (105) comprises:
determining whether the application program is an essential application program; and
closing the application program directly if the application program is not the essential application program, or providing an application program list by the mobile terminal for a user to decide whether to close the application program if the application program is the essential application program, and
when the application program is closed, adjusting the processor clock speed frequency to lower than a warning value by adjusting a message transfer mechanism of an operating system or a system application programming interface, API.

2. The method according to claim 1, **characterized in that** before the step of acquiring the at least one parameter from the mobile terminal, comprises:
acquiring or setting the predetermined threshold value (201) for said at least one parameter.

3. The method according to claim 1, **characterized in that** the step of acquiring the at least one parameter from the mobile terminal comprises:
acquiring the processor clock speed frequency by the message transfer mechanism of the operating system or the system application programming interfaced, API; and
acquiring the processor temperature by a temperature sensor; and
acquiring the battery remaining capacity by the system API.

4. The method according to claim 1, **characterized in that** the step of closing the application program to release resource and reduce the processor clock speed frequency is executed through a driver layer of the mobile terminal.

5. The method according to claim 1, **characterized in that** in the step of acquiring the at least one parameter of the processor clock speed frequency, the battery remaining capacity, or the processor temperature, the acquiring method is to acquire the processor clock speed frequency, the battery remaining capacity, or the processor temperature by the message transfer mechanism of the operating system or the system API.

6. A mobile terminal, comprising:
a processor clock speed detecting module (31) configured for detecting a processor working frequency, which is a clock speed frequency;
a power detecting module (32) configured for detecting a battery remaining capacity;
a processor temperature detecting module (33) configured for detecting a processor temperature;
an acquiring module (34) configured for acquiring the processor clock speed frequency, the battery remaining capacity or the processor temperature;
a first determining module (35) configured for determining whether the processor clock speed frequency is higher than a first predetermined threshold value, whether the battery remaining capacity is lower than a second predetermined threshold value, or whether the processor temperature is higher than a third predetermined threshold value;
a calculating module (36) configured for generating a strategy for adjusting the processor clock speed frequency and wherein the strategy is to calculate which of application programs of the mobile terminal required to be closed; and
a processor frequency adjusting module (37) configured for releasing resource and reducing the processor clock speed frequency in accordance with the strategy for closing the corresponding application programs,
**characterized in that** the processor frequency adjusting module (37) comprises: a second determining module (38) configured for determining whether the application program is an essential application program before closing the application program, if no, then the application program is closed directly, if yes, then the mobile terminal provides an application program list for a user to decide whether to close the application program if the application program is an essential application program,
when the application program is closed, the processor frequency adjusting module (37) adjusts the processor clock speed frequency to lower than a warning value by adjusting a message transfer mechanism of an operating system or a system application programing interface, API.

7. The mobile terminal according to claim 6, **characterized in that** the mobile terminal comprises:
a threshold module (39) configured for acquiring or setting the first predetermined threshold value, the second predetermined threshold value, or the third predetermined threshold value.

8. The mobile terminal according to claim 6, **characterized in that** the processor frequency adjusting module (37) closes the application program through a driver layer of the mobile terminal and the acquiring module (34) acquires the processor clock speed frequency, the battery remaining capacity or the processor temperature by a message transfer mechanism of the operating system or the system API.

## Patentansprüche

1. Verfahren zur Einstellung der Betriebslast eines mobilen Endgeräts, umfassend:
Ermitteln von Parametern einer Prozessortaktgeschwindigkeitsfrequenz, einer Batterierestkapazität oder einer Prozessortemperatur;
Erfassen von zumindest einem Parameter aus dem mobilen Endgerät (102);
Vergleichen von jedem Parameter mit einem vorbestimmten Schwellenwert, um ein Vergleichsergebnis (103) zu erhalten;
**worin** das Verfahren ferner umfasst:
Bestimmen, dass ein Anwendungsprogramm des mobilen Endgeräts in Übereinstimmung mit dem Vergleichsergebnis geschlossen werden muss; und
Schließen des Anwendungsprogramms, um Ressource freizugeben und die Prozessortaktgeschwindigkeitsfrequenz zu reduzieren (105);
**dadurch gekennzeichnet, dass** der Schritt des Schließens des Anwendungsprogramms, um Ressource freizugeben und die Prozessortaktgeschwindigkeitsfrequenz zu reduzieren (105), umfasst:
Bestimmen, ob das Anwendungsprogramm ein wesentliches Anwendungsprogramm ist; und
Schließen des Anwendungsprogramms direkt, wenn das Anwendungsprogramm nicht das wesentliche Anwendungsprogramm ist, oder Liefern einem Benutzer einer Anwendungsprogrammliste durch das mobile Endgerät, damit der Benutzer beschließen kann, ob er das Anwendungsprogramm schließen soll, wenn das Anwendungsprogramm das wesentliche Anwendungsprogramm ist, und, wenn das Anwendungsprogramm geschlossen ist, Einstellen der Prozessortaktgeschwindigkeitsfrequenz, damit sie kleiner als ein Warnwert ist, indem ein Nachrichtenübermittlungsmechanismus eines Betriebssystems oder eine Systemanwendungsprogrammierungsschnittstelle, API, eingestellt wird.

2. Verfahren nach Anspruch 1, **dadurch gekennzeichnet, dass** es vor dem Schritt des Erfassens des zumindest einen Parameters aus dem mobilen Endgerät umfasst:
Erfassen oder Setzen des vorbestimmten Schwellenwerts (201) für den genannten zumindest einen Parameter.

3. Verfahren nach Anspruch 1, **dadurch gekennzeichnet, dass** der Schritt des Erfassens des zumindest einen Parameters aus dem mobilen Endgerät umfasst:
Erfassen der Prozessortaktgeschwindigkeitsfrequenz durch den Nachrichtenübermittlungsmechanismus des Betriebssystems oder die Systemanwendungsprogrammierungsschnittstelle, API; und
Erfassen der Prozessortemperatur durch einen Temperatursensor; und
Erfassen der Batterierestkapazität durch die API des Systems.

4. Verfahren nach Anspruch 1, **dadurch gekennzeichnet, dass** der Schritt des Schließens des Anwendungsprogramms, um Ressource freizugeben und die Prozessortaktgeschwindigkeitsfrequenz zu reduzieren, durch eine Treiberschicht des mobilen Endgeräts durchgeführt wird.

5. Verfahren nach Anspruch 1, **dadurch gekennzeichnet, dass** im Schritt des Erfassens des zumindest einen Parameters der Prozessortaktgeschwindigkeitsfrequenz, der Batterierestkapazität oder der Prozessortemperatur das Erfassungsverfahren darin besteht, die Prozessortaktgeschwindigkeitsfrequenz, die Batterierestkapazität oder die Prozessortemperatur durch den Nachrichtenübermittlungsmechanismus des Betriebssystems oder die API des Systems zu erfassen.

6. Mobiles Endgerät, umfassend:
ein Prozessortaktgeschwindigkeitsermittlungsmodul (31), das dafür eingerichtet ist, eine Prozessorarbeitsfrequenz zu ermitteln, die eine Taktgeschwindigkeitsfrequenz ist;
ein Leistungsermittlungsmodul (32), das dafür eingerichtet ist, eine Batterierestkapazität zu ermitteln;
ein Prozessortemperaturermittlungsmodul (33), das dafür eingerichtet ist, eine Prozessortemperatur zu ermitteln;
ein Erfassungsmodul (34), das dafür eingerichtet ist, die Prozessortaktgeschwindigkeitsfrequenz, die Batterierestkapazität oder die Prozessortemperatur zu erfassen;
ein erstes Bestimmungsmodul (35), das dafür eingerichtet ist, zu bestimmen, ob die Prozessortaktgeschwindigkeitsfrequenz höher als ein erster vorbestimmter Schwellenwert ist, ob die Batterierestkapazität kleiner als ein zweiter vorbestimmter Schwellenwert ist, oder ob die Prozessortemperatur höher als ein dritter vorbestimmter Schwellenwert ist;
ein Berechnungsmodul (36), das dafür eingerichtet ist, eine Strategie zur Einstellung der Prozessortaktgeschwindigkeitsfrequenz zu erzeugen, und worin die Strategie darin besteht, zu berechnen, welches der Anwendungsprogramme des mobilen Endgeräts geschlossen werden muss; und
ein Prozessorfrequenzeinstellungsmodul (37), das dafür eingerichtet ist, Ressource freizugeben und die Prozessortaktgeschwindigkeitsfrequenz in Übereinstimmung mit der Strategie zum Schließen der entsprechenden Anwendungsprogramme zu reduzieren;
**dadurch gekennzeichnet, dass** das Prozessorfrequenzeinstellungsmodul (37) umfasst:
ein zweites Bestimmungsmodul (38), das dafür eingerichtet ist, zu bestimmen, ob das Anwendungsprogramm ein wesentliches Anwendungsprogramm ist, bevor das Anwendungsprogramm geschlossen wird; wenn dies nicht der Fall ist, wird das Anwendungsprogramm direkt geschlossen; wenn dies der Fall ist, dann liefert das mobile Endgerät einem Benutzer eine Anwendungsprogrammliste, damit der Benutzer beschließen kann, ob er das Anwendungsprogramm schließen soll, wenn das Anwendungsprogramm ein wesentliches Anwendungsprogramm ist,
wenn das Anwendungsprogramm geschlossen ist, stellt das Prozessorfrequenzeinstellungsmodul (37) die Prozessortaktgeschwindigkeitsfrequenz so ein, damit sie kleiner als ein Warnwert ist, indem ein Nachrichtenübermittlungsmechanismus eines Betriebssystems oder eine Systemanwendungsprogrammierungsschnittstelle, API, eingestellt wird.

7. Mobiles Endgerät nach Anspruch 6, **dadurch gekennzeichnet, dass** das mobile Endgerät umfasst:
ein Schwellenmodul (39), das dafür eingerichtet ist, den ersten vorbestimmten Schwellenwert, den zweiten vorbestimmten Schwellenwert oder den dritten vorbestimmten Schwellenwert zu erfassen oder zu setzen.

8. Mobiles Endgerät nach Anspruch 6, **dadurch gekennzeichnet, dass** das Prozessorfrequenzeinstellungsmodul (37) das Anwendungsprogramm durch eine Treiberschicht des mobilen Endgeräts schließt, und das Erfassungsmodul (34) die Prozessortaktgeschwindigkeitsfrequenz, die Batterierestkapazität oder die Prozessortemperatur durch einen Nachrichtenübermittlungsmechanismus des Betriebssystems oder die API des Systems erfasst.

## Revendications

1. Méthode pour régler la charge de fonctionnement d'un terminal mobile, comprenant :
la détection des paramètres d'une fréquence de vitesse d'horloge du processeur, d'une capacité restante de la batterie ou d'une température du processeur ;
l'acquisition d'au moins un paramètre du terminal mobile (102) ;
la comparaison de chaque paramètre avec une valeur de seuil prédéterminée pour obtenir un résultat de comparaison (103) ;
**où** la méthode comprend en outre :
la détermination si un programme d'application du terminal mobile doit être fermé selon le résultat de la comparaison ; et
la fermeture du programme d'application pour libérer des ressources et
réduire la fréquence de vitesse d'horloge (105) du processeur ;
**caractérisée en ce que** l'étape de fermeture du programme d'application pour libérer des ressources et réduire la fréquence de vitesse d'horloge (105) du processeur comprend :
la détermination si le programme d'application est un programme d'application essentiel ; et
la fermeture directe du programme d'application si le programme d'application n'est pas le programme d'application essentiel, ou fournir une liste de programmes d'application par le terminal mobile pour qu'un utilisateur décide s'il doit fermer le programme d'application si le programme d'application est le programme d'application essentiel, et
lorsque le programme d'application est fermé, le réglage de la fréquence de vitesse d'horloge du processeur à une valeur inférieure à une valeur d'avertissement en réglant un mécanisme de transfert de message d'un système d'exploitation ou une interface de programmation d'application, API, du système.

2. Méthode selon la revendication 1, **caractérisée en ce qu'**avant l'étape d'acquisition d'au moins un paramètre à partir du terminal mobile, comprend :
l'acquisition ou le réglage de la valeur de seuil (201) prédéterminée pour ledit au moins un paramètre.

3. Méthode selon la revendication 1, **caractérisée en ce que** l'étape d'acquisition d'au moins un paramètre à partir du terminal mobile comprend :
l'acquisition de la fréquence de vitesse d'horloge du processeur par le mécanisme de transfert de message du système d'exploitation ou de l'interface de programmation d'application, API, du système ; et
l'acquisition de la température du processeur par un capteur de la température ; et l'acquisition de la capacité restante de la batterie par l'API du système.

4. Méthode selon la revendication 1, **caractérisée en ce que** l'étape de fermeture du programme d'application pour libérer des ressources et réduire la fréquence de vitesse d'horloge du processeur est exécutée à travers une couche pilote du terminal mobile.

5. Méthode selon la revendication 1, **caractérisée en ce que** dans l'étape d'acquisition d'au moins un paramètre de la fréquence de vitesse d'horloge du processeur, de la capacité restante de la batterie ou de la température du processeur, la méthode d'acquisition consiste à acquérir la fréquence de vitesse d'horloge du processeur, la capacité restante de la batterie ou la température du processeur par le mécanisme de transfert de message du système d'exploitation ou de l'API du système.

6. Terminal mobile, comprenant :
un module de détection de la vitesse d'horloge (31) du processeur configuré pour détecter une fréquence de travail du processeur, qui est une fréquence de vitesse d'horloge ;
un module de détection de puissance (32) configuré pour détecter une capacité restante de la batterie ;
un module de détection de la température (33) du processeur configuré pour détecter une température du processeur ;
un module d'acquisition (34) configuré pour acquérir la fréquence de vitesse d'horloge du processeur, la capacité restante de la batterie ou la température du processeur ;
un premier module de détermination (35) configuré pour déterminer si la fréquence de vitesse d'horloge du processeur est supérieure à une première valeur de seuil prédéterminée, si la capacité restante de la batterie est inférieure à une deuxième valeur de seuil prédéterminée, ou si la température du processeur est supérieure à une troisième valeur de seuil prédéterminée ;
un module de calcul (36) configuré pour générer une stratégie pour régler la fréquence de vitesse d'horloge du processeur et où la stratégie consiste à calculer lequel des programmes d'application du terminal mobile doit être fermé ; et
un module de réglage de la fréquence (37) du processeur configuré pour libérer des ressources et réduire la fréquence de vitesse d'horloge du processeur conformément à la stratégie de fermeture des programmes d'application correspondants,
**caractérisé en ce que** le module de réglage de la fréquence (37) du processeur comprend : un deuxième module de détermination (38) configuré pour déterminer si le programme d'application est un programme d'application essentiel avant de fermer le programme d'application, si non, alors le programme d'application est fermé directement, si oui, alors le terminal mobile fournit une liste de programmes d'application permettant à un utilisateur de décider s'il doit fermer le programme d'application si le programme d'application est un programme d'application essentiel,
lorsque le programme d'application est fermé, le module de réglage de la fréquence (37) du processeur règle la fréquence de vitesse d'horloge du processeur à une valeur inférieure à une valeur d'avertissement en réglant un mécanisme de transfert de message d'un système d'exploitation ou une interface de programmation d'application API du système.

7. Terminal mobile selon la revendication 6, **caractérisé en ce que** le terminal mobile comprend :
un module de seuil (39) configuré pour acquérir ou régler la première valeur de seuil prédéterminée, la deuxième valeur de seuil prédéterminée ou la troisième valeur de seuil prédéterminée.

8. Terminal mobile selon la revendication 6, **caractérisé en ce que** le module de réglage de la fréquence (37) du processeur ferme le programme d'application à travers une couche pilote du terminal mobile et le module d'acquisition (34) acquiert la fréquence de vitesse d'horloge du processeur, la capacité restante de la batterie ou la température du processeur par un mécanisme de transfert de message du système d'exploitation ou de l'API du système.
